(19) Europäisches Patentamt
European Patent Office
Office européen des brevets

(11) **EP 2 630 370 B1**

(12) **EUROPÄISCHE PATENTSCHRIFT**

(45) Veröffentlichungstag und Bekanntmachung des Hinweises auf die Patenterteilung:
**14.06.2017   Patentblatt 2017/24**

(21) Anmeldenummer: **11781739.5**

(22) Anmeldetag: **11.10.2011**

(51) Int Cl.:
*F16H 1/22* (2006.01)     *F03D 80/70* (2016.01)
*F03D 15/00* (2016.01)     *F16C 19/54* (2006.01)
*F16H 57/08* (2006.01)

(86) Internationale Anmeldenummer:
**PCT/EP2011/005068**

(87) Internationale Veröffentlichungsnummer:
**WO 2012/052123 (26.04.2012 Gazette 2012/17)**

(54) **BAUGRUPPE ZUR AUSKOPPLUNG DER ROTATIONSENERGIE VON DER ROTORNABE DES WINDRADES EINER WINDKRAFTANLAGE**

ASSEMBLY FOR EXTRACTING THE ROTATIONAL ENERGY FROM THE ROTOR HUB OF THE WIND TURBINE OF A WIND TURBINE SYSTEM

MODULE POUR LE DÉCOUPLAGE DE L'ÉNERGIE DE ROTATION DU MOYEU DE ROTOR DE LA ROUE ÉOLIENNE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2010   DE 102010049023**

(43) Veröffentlichungstag der Anmeldung:
**28.08.2013   Patentblatt 2013/35**

(73) Patentinhaber: **IMO Holding GmbH**
**91350 Gremsdorf (DE)**

(72) Erfinder: **HUBERTUS, Frank**
**91315 Höchstadt (DE)**

(74) Vertreter: **Küchler, Stefan**
**Patentanwalt**
**Färberstrasse 20**
**90402 Nürnberg (DE)**

(56) Entgegenhaltungen:
WO-A1-2011/089036     DE-A1-102007 041 508
DE-B3- 10 318 945

**Beschreibung**

Die Erfindung richtet sich auf eine Baugruppe mit einem Anschluß für die Rotornabe eines Windrades einer Windkraftanlage, deren Rotor-Drehachse während des Betriebs etwa in Windrichtung weist, zwecks Aufnahme aller dort auftretenden Kräfte und Momente, sowie mit wenigstens einem Rotor- oder Hauptlager zur Ableitung von Axial- und Radialkräften und Kippmomenten in eine tragende Struktur der Windkraftanlage, ferner mit einer Einrichtung zur Auskopplung der Rotationsenergie der Rotornabe des Windrades in Form eines einstufigen Planetengetriebes, das mit dem Rotor- oder Hauptlager integriert ist und dessen Planetenräder an einem Planetenradträger gelagert sind und mit einem Sonnenrad und einem Hohlrad gleichzeitig kämmen, sowie mit einem an der Abtriebsseite des Planetengetriebes angeschlossenen oder anschließbaren Generator zur Wandlung der Rotationsenergie in elektrische Energie.

Eine gattungsgemäße Baugruppe ist in der WO 02/14690 A1 bzw. DE 01 954 251 T1 offenbart. Dort ist ein Antriebsaufbau für eine Windturbine beschrieben, mit einer eine Rotornabe tragenden Struktur, sowie einem Hauptlager, einem einstufigen Planetengetriebe und einem Generator. Allerdings ist dort der äußere Ring des Hauptlagers an einer Windturbinen-Rotornabe angeschlossen oder zum Anschluß daran geeignet. Da deshalb der innere Ring an einer tragenden Struktur der Gondel od. dgl. festzulegen ist und also nicht zur Übertragung Drehmomenten zur Verfügung steht, ist folglich eine zusätzliche Konstruktion zum Abgriff von (Antriebs-) Drehmomenten erforderlich, die ihrerseits mit der Rotornabe verbunden sein muß. Es erbgibt sich damit insgesamt eine sehr aufwendige Konstruktion, die auch anfallende Wartungsarbeiten erschwert.

Aus den Nachteilen des beschriebenen Standes der Technik resultiert das die Erfindung initiierende Problem, eine gattungsgemäße Baugruppe zum Anschluß an die Rotornabe eines Windrades einer Windkraftanlage zwecks Aufnahme der dort auftretenden Kräfte und Momente derart weiterzubilden, dass mit einfachsten Mitteln die vom Wind verrichtete Antriebsleistung von den sonstigen Kräften und Momenten getrennt und schließlich in elektrische Energie umgewandelt werden kann. Ferner soll die zu schaffende Anordnung möglichst wartungsfreundlich sein, damit gerade auch an schwer zugänglichen Windkraftanlagen - bspw. auf Bergen oder im Off-Shore-Bereich auf See - eine Wartung ohne Hilfsmittel, insbesondere ohne einen Kran - durchgeführt werden kann.

Die Lösung dieses Problems gelingt dadurch, dass der Innenring eines Rotor- oder Hauptlagers der Windkraftanlage an einer Stirnseite eine Anschlußfläche zur Verbindung mit der Rotornabe der Windkraftanlage aufweist, an seiner Außenseite eine oder mehrere Laufbahnen für Wälzkörper aufweist, welche gleichzeitig an einer oder mehreren Laufbahnen des Außenrings abrollen, und an seiner Innenseite mit einer rundumlaufenden Verzahnung versehen ist, woran die Rotationsenergie abgegriffen wird.

Damit wird der Innenring des Rotor- oder Hauptlagers zu einer Art "Weiche" für die Weiterleitung von Kräften und Drehmomenten: Während Axial- und Radialkräfte und Kippmomente über den Außenring in eine tragende Struktur der Windkraftanlage abgeleitet werden, kann die Rotationsenergie der Nabe über die Innenverzahnung des Innenrings abgegriffen werden. Hierzu genügt ein einziges Konstruktionsteil, so dass die Anzahl der Bauteile minimiert und somit die Störanfälligkeit auf ein Minimum reduziert ist. Außerdem können angeschlossene Getriebeeinheiten leicht von hinten, also aus dem rückwärtigen Bereich der Gondel, gewartet und ggf. auch ausgebaut werden, ohne dass dazu die Rotornabe von dem diese tragenden Innenring des Haupt- oder Rotorlagers demontiert werden muß. Solche Wartungs- und/oder Reparaturarbeiten können daher ohne Kran vorgenommen werden.

Es hat sich als günstig erwiesen, dass der Innenring des Rotor- oder Hauptlagers an seiner der Rotornabe zugewandten Stirnseite, insbesondere an seiner dortigen Anschlußfläche, Anschlußelemente zur Befestigung der Rotornabe aufweist, vorzugsweise in Form von kranzförmig verteilt angeordneten Befestigungsbohrungen, insbesondere in Form von kranzförmig verteilt angeordneten Sacklochbohrungen mit Innengewinde. Daran läßt sich die Rotornabe mit einer entsprechenden Anzahl von Schrauben, Gewindebolzen od. dgl. hinreichend fest verbinden, so dass sie auch bei starken Windböen sicher an dem Lager verankert bleibt.

Es liegt im Rahmen der Erfindung, dass die Laufbahnen an dem Innenring für daran entlang laufende Wälzkörper und dessen rundumlaufende Verzahnung und/oder dessen Anschlußelemente zur Befestigung der Rotornabe durch Bearbeitung oder Formgebung eines gemeinsamen Grundkörpers gebildet sind. Durch diese Maßnahme werden alle Kräfte in einem einzigen Grundkörper von der Rotornabe aufgenommen und sodann ohne innere spielbehaftete Teile aufgetrennt in abzustützende Axial- und Radialkräfte und Kippmomente einerseits und in das abzugreifende Antriebsdrehmoment andererseits. Da es hierbei mangels gegeneinander bewegter Teile keinerlei Spiel oder sonstige Relativbewegung geben kann, ist ein solcher Innenring nahezu verschleißfrei.

Bevorzugt ist das Rotor- oder Hauptlager als mehrreihiges Kugel-, Kegel-, Tonnen-, Rollen- und/oder Nadellager ausgebildet. Davon sollen insbesondere auch Mischformen umfaßt sein, also Lager mit Reihen von unterschiedlichen Wälzkörpern, obwohl eine Ausführungsform in Form eines mehrreihigen Wälzlagers mit ausschließlich gleichartigen Wälzkörpern präferiert wird. Während Kugellager eventuell mit weniger Wälzkörperreihen auskommen, bieten die übrigen Wälzkörpergeometrien Vorteile bei extremen Luftströmungsverhältnissen wie bspw. Orkanböen, wenn nicht unerhebliche Kräfte an dem Windrad angreifen, die nur durch eine äußerst stabile Lagerung sicher abgeleitet werden können. Dabei ist von Vorteil, dass die Tragkraft eines Lagers mit linienförmiger Berührung, insbesondere eines Rollenlagers, im Allgemeinen höher ist als die Tragkraft eines vergleichbaren Kugellagers mit nahezu punktförmigen Berührungsbereichen. Linienförmige Berührungen treten im Allgemeinen bei Wälzkörper auf, welche eine ausgeprägte Rotationsachse haben, also rotationssymmetrisch sind, aber nicht kugelförmig. Dabei ist es nicht von ausschlaggebender Bedeutung, ob sich der Durchmesser eines Wälzkörpers entlang der Längsrichtung seiner Rotationsachse ändert, wie bei Tonnen- oder Kegellagern, oder nicht, wie bei Rollen- oder Nadellagern.

Die Erfindung sieht weiterhin vor, dass der Innenring des Rotor- oder Hauptlagers als sog. Nasenring ausgebildet ist mit einem rundumlaufenden Bund an seiner Außenseite. Eine solche Nase - also ein rundum laufender Bund - ist in der Lage, besonders starke Axialkräfte und Kippmomente zu übertragen.

Die Erfindung läßt sich dahingehend weiterbilden, dass an der/den Stirn- und/oder Umfangsseiten(n) des rundumlaufenden Bundes Laufflächen für eine oder mehrere Reihen von Wälzkörpern angeordnet sind. Bevorzugt dienen an den beiden Stirnseiten des Bundes entlang laufende Wälzkörper zur Übertragung von axialen Druckkräften in beiden Richtungen sowie zur Übertragung von Kippmomenten, während an einer Umfangsseite entlang laufende Wälzkörper Radialkräfte übertragen.

Wenn der Außenring des Rotor- oder Hauptlagers unterteilt ist in einen nabenseitigen Teilring und in einen generatorseitigen Teilring, so getaltet sich der Zusammenbau eines derartigen Lagers besonders einfach, da die beiden Teilringe des Außenrings zum Einfügen des Innenrings auseinander bewegt werden können.

Weitere Vorteile ergeben sich dadurch, dass der Spalt zwischen dem Innen- und dem Außenring des Rotor- oder Hauptlagers abgedichtet ist, insbesondere im Bereich des nabenseitigen Teilrings. Dadurch wird das Austreten eines Schmiermittels - vorzugsweise Schmierfett - und auch das Eindringen von Schmutz und sonstigen Partikeln verhindert. Auch Regen kann ferngehalten werden, der ansonsten ein enthaltenes Schmiermittel auswaschen würde.

Eine besonders einfache Konstruktion erhält man, wenn die rundumlaufende Verzahnung an der Innenseite des Innenrings des Rotor- oder Hauptlagers gleichzeitig das Hohlrad des Planetengetriebes bildet, denn durch diese Maßnahme wird der Innenring des Rotor- oder Hauptlagers gleichzeitig zu einem Bestandteil des Planetengetriebes.

Es hat sich bewährt, dass alle Komponenten der erfindungsgemäßen Baugruppe einschließlich aller angeschlossenen Abtriebselemente wie Getriebe, Generator, Bremse, etc. in axialer Richtung hinter der Anschlußfläche des Innenrings liegen. Denn solchenfalls erstrecken sich keine Komponenten der erfindungsgemäßen Baugruppe in die Rotornabe hinein oder auch nur in deren Nähe, so dass im Fall einer Demontage der Nabe keine Gefahr für Getriebeteile oder sonstige Teile der erfindungsgemäßen Baugruppe besteht. Diese werden von der vorderen Anschlußfläche des Innenrings vor Beschädigungen bspw. infolge von Kollisionen mit der an einem Kran hängenden Rotornabe od. dgl. geschützt.

Die Erfindung sieht weiterhin vor, dass das Planetengetriebe in radialer Richtung nicht über das Rotor- oder Hauptlager hinausragt. Durch diese Maßnahme erhält das Rotor- oder Hauptlager einen maximalen Durchmesser, welcher etwa dem Nabendurchmesser des Windrades entspricht und damit auch in der Größenordnung des Gondelquerschnitts im vorderen Bereich liegt und also bei Bedarf ausgebaut und nach hinten, also zum Zentrum der Gondel hinein, weggeschoben werden kann.

Das Planetengetriebe kann radial innerhalb des Rotor- oder Hauptlagers angeordnet sein. Dadurch ergibt sich eine optimale Raumausnutzung, wodurch sich ggf. die Baugröße der Gondel reduzieren läßt.

Besondere Vorteile lassen sich dadurch erzielen, dass der Innenring des Rotor- oder Hauptlagers an seiner der Rotornabe zugewandten Stirnseite mit wenigstens einer nabenseitigen Platte von etwa kreisförmigem Umfang verbunden ist, deren Außendurchmesser gleich oder kleiner ist als der Durchmesser des Rotor- oder Hauptlagers, vorzugsweise gleich oder kleiner als der Außendurchmesser des Innenrings. Dies Platte schützt einerseits die dahinter liegenden Teile der erfindungsemäßen Anordnung, bspw. die Teile eines Getriebes, und kann dieselben andererseits führen und/oder stabilisieren.

An der nabenseitigen Platte läßt sich eine Lagerhülse festlegen, an der das Sonnenrad des Planetengetriebes gelagert sein kann. Es handelt sich hierbei um eine einfache Methode, um das Sonnenrad eines Planetengetriebes inmitten des Getriebes ortsfest zu lagern.

Ferner kann das Sonnenrad des Planetengetriebes an dem Generator zu dessen Antrieb angeschlossen sein. Aufgrund seiner geringeren Zähnezahl rotiert das Sonnenrad im Allgemeinen schneller als die angetriebene Einheit des Planetengetriebes; daher eignet sich das Sonnenrad besonders zur Weitergabe dieser schnellen Rotation an den Generator der Windkraftanlage.

Wenn der Planetenradträger des Planetengetriebes am Chassis, Rahmen oder Gehäuse der Gondel der Windkraftanlage fixiert ist, so ist die Drehzahl $n_{So}$ des abtreibenden Sonnenrades um das Verhältnis $z_{Ho}/z_{So}$ der Zähnezahlen von Hohlrad zu Sonnenrad größer als die Drehzahl $n_{Ho}$ des angetriebenen Hohlrades:

$$n_{So} = n_{Ho} * z_{Ho}/z_{So},$$

allerdings in der umgekehrten Drehrichtung.

Zur Fixierung des Planetenradträgers kann dieser an wenigstens einer generatorseitigen Platte angeordnet, insbesondere festgelegt sein, die ihrerseits an der der Rotornabe abgewandten Stirnseite des Rotor- oder Hauptlagers angeordnet ist. Eine Platte kann in ihrer Ebene mühelos auch größere Drehmomente übertragen und eignet sich daher optimal für eine ortsfeste Fixierung des Planetenradträgers.

Vorzugsweise ist die generatorseitige Platte mit dem Außenring des Rotor- oder Hauptlagers verbunden oder verbindbar. Es handelt sich in beiden Fällen um nicht rotierende Teile, so dass dieselben untereinander zu einer Baugruppe verbunden sein können.

Ein weiterer Vorteil der Erfindung besteht darin, dass ein, mehrere oder vorzugsweise alle Planetenräder einstückig und ungeteilt ausgebildet sind. Dadurch können die Planetenräder die gesamte Breite zwischen nabenseitiger und generatorseitiger Platte einnehmen, wodurch die Druckbelastung an den Zahnflanken minimiert wird.

Besonders bewährt hat sich ein Planetengetriebe mit einem Übersetzungsverhältnis ü = $n_{Ho} : n_{So}$ zwischen der Drehzahl $n_{Ho}$ des Hohlrades und der Drehzahl $n_{So}$ des Sonnenrades in einem Bereich von 1 : 1,5 bis 1 : 20, vorzugsweise mit einem Übersetzungsverhältnis in einem Bereich von 1 : 2 bis 1 : 12, insbesondere mit einem Übersetzungsverhältnis in einem Bereich von 1 : 4 bis 1 : 7, wobei die Drehzahl des generatorseitigen Abtriebs größer ist als die nabenseitige Antriebsdrehzahl.

Es liegt im Rahmen der Erfindung, dass der Durchmesser eines Plantenrades wenigstens halb so groß ist wie der Durchmesser des Sonnenrades, vorzugsweise wenigstens genauso groß, insbesondere wenigstens anderthalb mal so groß wie der Durchmesser des Sonnenrades.

Der Generator sollte in radialer Richtung nicht über das Rotor- oder Hauptlager hinausragen. Wenn der Außendurchmesser des Generators etwa dem Außendurchmesser des Rotor- oder Hauptlagers entspricht, können beide Teile einzeln oder gemeinsam innerhalb der Gondel verschoben werden, bspw. zu Reinigungs-, Wartungs- oder Reparaturzwecken.

Die Erfindung empfiehlt, den Stator des Generators an der generatorseitigen Platte des Haupt- oder Rotorlagers und/oder an dessen Außenring anzuordnen, insbesondere festzulegen. Diese Teile sind im Betrieb allesamt drehfest an der Tragstruktur der Gondel verankert und können daher problemlos miteinander verbunden werden. Dadurch können sie bspw. als eine gemeinsame Baugruppe transportiert werden.

Indem der Rotor des Generators an dem Sonnenrad des Planetengetriebes angeschlossen ist, kann er mit maximaler Drehzahl angetrieben werden.

Die Erfindung erfährt eine weitere Optimierung dadurch, dass zwischen dem Rotor des Generators und dem Sonnenrad des Planetengetriebes ein Verbindungsstück vorgesehen ist, das vorzugsweise als Reduzierstück ausgebildet sein kann. Diesem Reduzierstück obliegt es, einen Ausgleich zwischen dem Durchmesser des Generator-Rotors und dem im Allgemeinen kleineren Durchmesser des Sonnenrades des Planetengetriebes herzustellen.

Einer Abdichtung, die zwischen dem Verbindungsstück oder dem Sonnenrad einerseits und der jenes führenden Hülse oder Achse vorgesehen sein kann, obliegt es, das Schmiermittel aus dem Bereich der Lagerung und/oder des Planetengetriebes von dem Generator fernzuhalten.

Eine vorteilhafte Weiterbildung der Erfindung besteht darin, dass das Verbindungsstück, insbesondere das Reduzierstück, mit einem Stützlager gekoppelt, verbunden oder integriert ist. Dieses Stützlager soll den vergleichsweise schnell rotierenden Generator-Rotor zusätzlich stabilisieren und damit einer potentiellen Unwucht strikt entgegenwirken.

Das Stützlager kann als Wälzlager ausgebildet sein, so dass die davon verursachten Reibungsverluste minimal sind.

Eine besonders stabile Anordnung erhält man, wenn der Gegenring des Stützlagers zum Verbindungsstück an der generatorseitigen Platte des Rotor- oder Hauptlagers festgelegt oder damit integriert ist.

Bevorzugt ist der Rotor des Generators scheibenförmig ausgebildet, vorzugsweise kreisringförmig. Bevorzugt ist hierbei die radiale Erstreckung eines Querschnitts durch den Rotor größer als dessen axiale Erstreckung. Eine solche Bemessung erlaubt es, den in einer Gondel zur Verfügung stehenden Raum optimal auszunutzen. Ggf. können zwei oder mehrere derartige Scheibenrotoren in axialer Richtung hintereinander angeordnet werden, um die Leistung des Generators zu steigern.

Der Generator kann mit Permanentmagneten versehen sein. Diese eignen sich besonders für den An- oder Einbau an/in einen Scheibenrotor. Insbesondere können zu diesem Zweck Magnetplatten an dem Scheibenrotor befestigt und/oder in demselben eingebettet werden. Bevorzugt befinden sich die Magnetpole dieser Magnete an deren etwa ebenen Stirnseiten, dem Luftspalt zugewandt.

Bei einem Scheibenrotor ergibt sich ein ebenfalls scheibenförmiger Luftspalt zwischen Rotor und Stator, wobei sich der Rotor vorzugsweise zwischen zwei Statorscheiben befindet. Sofern - wie die Erfindung weiterhin vorsieht - das von den Magneten des Scheibenrotors erzeugte magnetische Feld diesen Luftspalt etwa lotrecht zu dessen Grundfläche durchsetzt, ergibt sich ein etwa axialer Verlauf des Magnetfeldes, bezogen auf dessen Rotationsachse. Man erhält dann einen Axialfeldgenerator, üblicherweise auch als Axialgenerator, bezeichnet.

Als besonders stabil hat es sich erwiesen, wenn der Stator des Generators dessen Rotor radial außen umgreift.

Die beiden Statorscheiben sind also außen durch eine Art Joch verbunden und stabilisieren sich dadurch gegenseitig. An/in den Statorscheiben sind vorzugsweise Elektrospulen appliziert oder eingesetzt, welche den magnetischen Fluß der Rotor-Magnete je nach Drehstellung des Rotors unterschiedlich stark umgreifen, so dass in diesen Elektrospulen eine elektrische Spannung induziert wird, insbesondere eine Wechselspannung. Diese kann bspw. gleichgerichtet und sodann wieder in eine Wechselspannung mit einer Schwingungsfrequenz von 50 Hz umgesetzt werden, die sich sodann in ein Stromnetz einspeisen läßt.

Sofern der Generator Kanäle für ein vorzugsweise flüssiges Kühl- und/oder Temperierungsmedium aufweist, besteht die Möglichkeit, diesen aktiv zu kühlen. Die dazu erforderlichen Kühlaggregate können ebenfalls in der Gondel der Windkraftanlage angeordnet sein.

Die Erfindung zeichnet sich witerhin aus durch eine zentrale Durchführung durch den Generator und/oder das Planetengetriebe für Kabel od. dgl. In dieser zentralen Durchführung können bspw. Steuerleitungen für die Antriebe zur Einstellung des Anstellwinkels der Rotorblätter hindurchgeführt werden, bspw. mittels Schleifringen oder einer anderweitigen Drehentkopplung.

Die erfindungsgemäße Baugruppe läßt sich an einer vorzugsweise gegossenen oder geschweißten Tragkonstruktion befestigen oder damit integrieren, welche gleichzeitig als tragende Struktur der Gondel dient und/oder mit einem Azimutlager zur Verschwenkung der Gondel verbunden oder integriert ist. Somit ergibt sich eine statisch besonders einfache Anordnung. Die Tragkonstruktion kann bspw. durch seitliche Diagonal-Verstrebungen die Winddruckkraft direkt auf eine Grundplatte der Gondel übertragen, von wo sie dann weiter in das Maschinenhauslager der Windkraftanlage eingeleitet wird.

Schließlich entspricht es der Lehre der Erfindung, dass an der der Nabe zugewandten Stirnseite einer die erfindungsgemäße Baugruppe tragenden Konstruktion ein oder mehrere Befestigungselemente vorgesehen sind, um die Nabe des Windrades während des Aus- oder Einbaus der erfindungsgemäßen Baugruppe vorübergehend an der Tragkonstruktion festlegen zu können. Diese Befestigungselemente müssen stark genug sein, um die gesamte Nabe des Windrades einschließlich aller Blätter tragen zu können. Sodann kann das Haupt- oder Rotorlager oder eine damit in Verbindung stehende Baueinheit geprüft, gewartet oder repariert werden. Anschließend wird das Lager wieder eingebaut, und nach Lösen der erfindungsgemäßen Befestigungselemente kann das Windrad wieder frei rotieren.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1     einen Vertikalschnitt durch die Gondel einer Windkraftanlage mit einer erfindungsgemäßen Baugruppe;

Fig. 2     die erfindungsgemäße Baugruppe aus Fig. 1, jedoch von der Windkraftanlage getrennt;

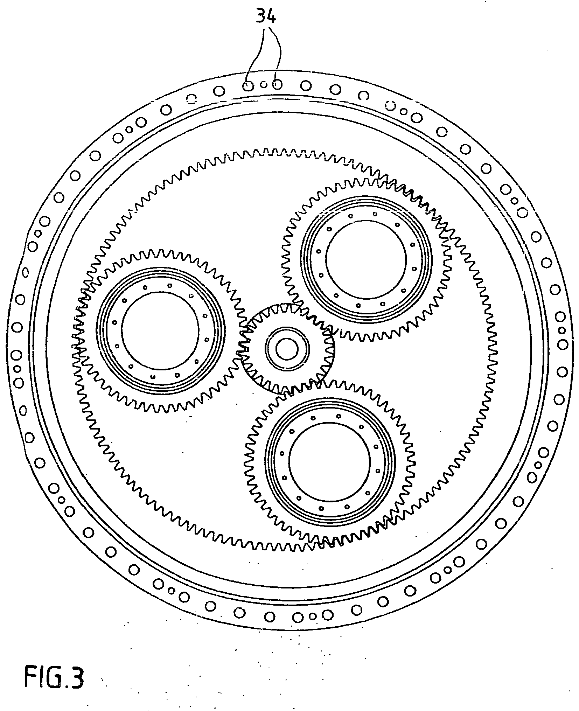

Fig. 3     einen Schnitt durch die Fig. 2 entlang der Linie III - III; sowie

Fig. 4     das Detail IV aus Fig. 1 in einer größeren Darstellung, im Betriebsfall;

Fig. 5     eine der Fig. 4 entsprechende Darstellung, jedoch in der reparatur- oder Wartungsposition; sowie

Fig. 6     eine der Fig. 1 entsprechende Darstellung einer abgewandelten Ausführungsform der Erfindung.

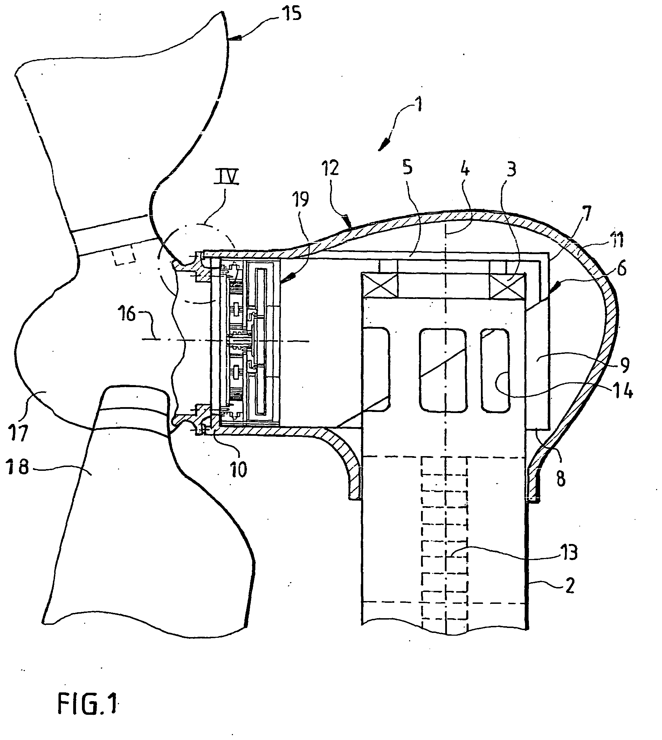

Die Windkraftanlage 1 aus der Zeichnung ist besonders wartungsfreundlich konzipiert. Auf dem oberen Ende eines Turms 2 von kreisförmigem Querschnitt ist in horizontal liegender Position ein Maschinenhauslager 3 zur Azimutverstellung aufgesetzt, welches in Fig. 1 nur schematisch wiedergegeben ist.

Während ein Ring dieses Maschinenhauslagers 3 an der Oberseite des Turms 2 festgelegt ist, so kann der andere Ring um die Turmachse 4 verschwenkt werden. Er wird zu diesem Zweck von einem nicht dargestellten Motor angetrieben, dessen Gehäuse bspw. an dem Turm 2 befestigt ist, und dessen Ritzel bspw. mit einer Verzahnung des verschwenkbaren Rings kämmt.

An dem verschwenkbaren Ring des Maschinenhauslagers 3 stützt sich eine obere Platte oder Rahmen 5 einer um die Turmachse 4 schwenkbaren Tragstruktur 6 ab. Diese Tragstruktur 6 kann ferner eine rückwärtige Wand 7 aufweisen sowie eine Bodenplatte 8 mit einer Ausnehmung für den Turm 2. Seitliche Wandplatten 9 verbinden die Bodenplatte 8, rückwärtige Wand 7 und obere Platte oder Rahmen 5 miteinander und sorgen somit für eine ausreichende Steifheit der Tragstruktur 6.

An ihrer der rückwärtigen Wand 7 etwa gegenüber liegenden Seite sind die Bodenplatte 8, die seitlichen Wandplatten 9 und die obere Platte oder Rahmen 5 verlängert bis zu einer etwa kreisförmigen Mündung 10.

Der gesamte Raum hinter dieser Mündung 10 ist von einer Verkleidung 11 umgeben, die aus aerodynamischen Gründen einem sanft gewölbten Verlauf folgt und Wind und Wetter von dem Innenraum abhalten soll, der als Maschinenhaus oder Gondel 12 dient und vom Wartungspersonal über eine innerhalb des Turms 2 angeordnete Treppe oder Leiter 13 und oberseitige Ausstiegsöffnungen 14 in der Wand des Turms 2 erreicht werden kann.

Während der Turm 2 der Windkraftanlage 1 unbeweglich ist und die Gondel 12 um eine vertikale Achse 4 in azimutaler Richtung schwenken kann, weist das eigentliche Windrad 15 einen weiteren Freiheitsgrad der Bewegung auf, nämlich den einer Drehung um eine zweite Achse 16, die im Bereich der Gondel 12 in etwa horizontaler Richtung von der Turmachse 4 weg kragt. Das Windrad 15 seinerseits besteht aus einer Nabe 17, von der mehrere Flügel oder Blätter 18 in etwa radialer Richtung, bezogen auf die Nabenachse 16 weg ragen. Dabei sind die Blätter 18 schließlich in je einem Blattlager um ihre Längsachse verdrehbar an der Nabe 17 gelagert, um bspw. in Abhängigkeit von der Windgeschwindigkeit mehr oder weniger stark angestellt zu werden.

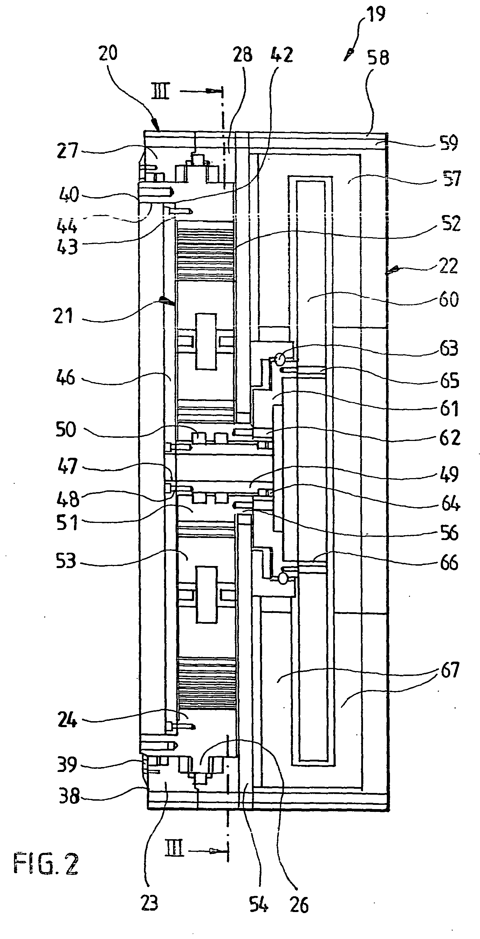

Wie im Folgenden weiter ausgeführt wird, ist die Nabe 17 um ihre Nabenachse 16 verdrehbar an der Tragstruktur 6 gelagert mittels einer erfindungsgemäßen Baugruppe 19, die in Fig. 2 vergrößert wiedergegeben ist.

Diese Baugruppe 19 umfaßt mehrere Funktionseinheiten, nämlich das eigentliche Haupt- oder Rotorlager 20, ein Getriebe 21, insbesondere ein Übersetzungsgetriebe, sowie einen Generator 22.

An der der Nabe 17 zugewandten Seite dieser Baugruppe 19 befindet sich das Hauptlager 20, welches zwei zueinander konzentrische Ringe aufweist, einen Außenring 23 und einen Innenring 24.

Das Hauptlager 20 ist als Wälzlager ausgeführt, insbesondere als Rollenlager. Wie man in Fig. 2 erkennen kann, weist ein Ring, vorzugsweise der Innenring 24, eine dem Ringspalt 25 zugewandte Nase in Form eines rundum laufenden Bundes 26 auf, der andere Ring, vorzugsweise der Außenring 23, ist im Bereich dieses Bundes 26 unterteilt in zwei Teilringe, nämlich in einen nabenseitigen Teilring 27 und einen generatorseitigen Teilring 28. Die beiden Stirnseiten 29, 30 und vorzugsweise auch die Umfangsseite 31 dieses Bundes 26 dienen als Laufflächen für wenigstens je eine Reihe von vorzugsweise tonnenförmigen Wälzkörpern 32, 33, die andererseits auch an dem Gegenring entlang laufen. Die beiden Teilringe 27, 28 weisen miteinander fluchtende Bohrungen 34 auf zum Hindurchstecken von Schrauben 35 oder Bolzen, womit beide Teilringe 27, 28 miteinander verbunden werden. Bevorzugt erstrecken sich diese Bohrungen 34 von einer Stirnseite des betreffenden Teilrings 27, 28 bis zu dessen gegenüberliegender Stirnseite durchgehend. Dadurch kann mittels darin eingesteckter Schrauben der Außenring 23 an der Tragstruktur 6 der Gondel 12 festgelegt werden. Außerdem kann der Außenring 23 an seiner Außenseite von einem hohlzylindrischen Abschnitt 36 der Tragstruktur 6 umgriffen und dadurch geführt werden.

Vorzugsweise ist der Spalt 25 zwischen dem Außenring 23 und dem Innenring 24 im Bereich der nabenseitigen Spaltmündung abgedichtet. Es kann sich hierbei um eine oder mehrere, rundumlaufende Dichtungen 37 handeln. Diese Dichtung(en) ihrerseits kann/können von einem an der äußeren, d.h. nabenseitigen Stirnseite 38 des Außenrings 23 festgelegten, bspw. angeschraubten Ring 39 (teilweise) überdeckt und dadurch gehalten sein.

Die äußere, d.h. nabenseitige Stirnseite 40 des Innenrings 24 dient als Anschlußfläche für die Nabe 17. In dieser Anschlußfläche bzw. Stirnseite 40 befinden sich mehrere, kranzförmig angeordnete Befestigungsmittel, vorzugsweise Befestigungsbohrungen, insbesondere Sacklochbohrungen mit Innengewinde, zum Anschrauben der Nabe 17 des Windrades 15. Mit darin eingesteckten Schrauben 41 wird die Nabe 17 gegen die Anschlußfläche 40 des Innenrings 24 gepreßt und dort schlüssig festgelegt, vorzugsweise reibschlüssig.

Radial innerhalb der Anschlußfläche 40 - bezogen auf die Nabenachse 16 - ist der Außenring 23 mit einer Auskehlung 42 versehen, die von einem ebenen, kreisringförmigen Stirnflächenabschnitt 43 begrenzt wird sowie von einem konkav gewölbten, hohlzylindrischen Abschnitt 44. In dem ebenen Stirnflächenabschnitt 43 befinden sich kranzförmig verteilt angeordnete Befestigungsbohrungen 45 zum Festschrauben einer nabenseitigen Abdeckplatte 46, die mit einer zentralen Ausnehmung 47 versehen ist.

Der Rand dieser Ausnehmung 47 ist von mehreren Befestigungsbohrungen 48 kranzförmig umgeben, an denen eine Hülse 49 festgeschraubt ist, die sich von der Abdeckplatte 46 durch das Hauptlager 20 hindurch erstreckt. Auf dieser Hülse 49 ist - vorzugsweise mittels eines oder mehrerer Wälzlager 50 - ein Zahnrad 51 um die Nabenachse 16 rotierbar gelagert,. Das Zahnrad 51 bildet gleichzeitig die Abtriebswelle des Getriebes 21.

Die Innenseite des Innenrings 24 des Hauptlagers 20 ist mit einer rundum laufenden Verzahnung 52 versehen, welche die Dreh-Antriebsleistung des Windrades 15 auf das Getriebe 21 überträgt.

Während das Zahnrad 51 als Sonnenrad des nach Art eines Planetengetriebes gestalteten Getriebes 21 dient, bildet die rundum laufende Verzahnung 52 an der Innenseite des Innenrings 24 des Hauptlagers 20 gleichzeitig dessen Hohlrad. Das Hohlrad 52 hat einen deutlich größeren Durchmesser als das Sonnenrad 51. In dem radialen Zwischenraum zwischen Sonnenrad 51 und Hohlrad 52 befinden sich mehrere verzahnte Planetenräder 53, die jeweils mit dem Sonnenrad 51 und dem Hohlrad 52 kämmen. Bevorzugt haben die Planetenräder einen größeren Durchmesser als das Sonnenrad 51. Aus diesem Grund ist die Anzahl der Planetenräder 53 beschränkt auf höchstens sechs, vorzugsweise fünf oder weniger, insbesondere vier oder weniger, beispielsweise drei.

Die Planetenräder 53 sind gelagert an einem gemeinsamen Steg oder Planetenradträger 54. Dieser hat die Gestalt einer Platte, welche an der generatorseitigen Stirnseite des Außenrings 23 festgelegt ist, vorzugsweise über Bohrungen 55, die mit den Bohrungen 34 im Außenring 23, insbesondere in dessen Teilringen 27, 28, fluchten und von je einer Befestigungsschraube 35 gemeinsam durchgriffen werden.

Auch die als Planetenradträger dienende, generatorseitige Platte 54 hat eine zentrale Ausnehmung, durch die ein stirnseitiger Bereich 56 des Sonnenrades 51 hindurch verlängert oder zumindest zugänglich ist und als Abtrieb des Planetengetriebes 21 dient.

Jenseits der als Planetenradträger dienenden Platte 54 schließt sich unmittelbar der Generator 22 an. Dieser hat eine etwa scheibenförmige Gestalt und ist als Axialfeldgenerator ausgebildet.

Sein Stator 57 ist in dem Generatorgehäuse 58 festgelegt, das wiederum zwischen seinen beiden Stirnseiten durchgehende Bohrungen 59 aufweist, die mit Bohrungen 55 in der Platte 54 einerseits und mit Bohrungen 34 im Außenring 23 andererseits fluchten. Diese Bohrungen 34, 55, 59 werden gemeinsam von Befestigungsschrauben 35 durchgriffen, so das alle diese Elemente der Baugruppe 19 - also Hauptlager, 20, Getriebe 21 bzw. Planetenradträger-Platte 54 und Generator 22 - gemeinsam an der Tragstruktur 6 festgelegt werden können. Natürlich wäre es auch möglich, diese Teile mit eigenen Befestigungsmitteln zunächst untereinander zu verbinden und sodann mit anderen Befestigungsmitteln gemeinsam an der Tragstruktur 6 festzulegen, oder zunächst das Hauptlager 20 mit der Tragstruktur 6 zu verbinden, und dann die Getriebe-Platte 54 und/oder den Generator 22 an dem Hauptlager 20 festzulegen.

Demgegenüber ist der Rotor 60 des Generators 22 über ein Reduzierstück 61 mit dem stirnseitigen Bereich 56 des Sonnenrades 51 drehfest verbunden, bspw. mittels achsparalleler Schraubverbindungen 62. Das Reduzierstück 61 ist notwendig, da der Rotor 60 vorzugsweise ringförmig ausgebildet ist mit einem Innendurchmesser, der im Allgemeinen größer ist als der Außendurchmesser des Sonnenrades 51. Ferner kann das Reduzierstück 61 mittels eines weiteren Lagers 63, vorzugsweise mittels eines Wälzlagers, insbesondere mittels eines Kugellagers, an der generatorseitigen Platte 54 abgestützt sein. Dazu dient bspw. ein äußerer Ring des Lagers 63, der seinerseits an der generatorseitigen Platte 54 befestigt ist. Ferner können im Bereich des Reduzierstücks 61 weitere Abdichtungen 64 vorgesehen sein, um sicherzustellen, dass Schmiermittel von dem Hauptlager 20 oder aus dem Getriebe 21 nicht in den Generator 22 gelangen kann.

Bevorzugt ist der Rotor 60 mittels zu der Nabenachse 16 paralleler Schraubverbindungen 65 an dem Reduzierstück 61 festgelegt, welche entlang seines inneren Randes 66 kranzförmig verteilt angeordnet sind. Radial außerhalb dieser Befestigungsmittel ist der scheibenförmige Rotor 60 mit Permanentmagneten bestückt, welche an ihren Flachseiten Magnetpole aufweisen, so dass sich in dem Spalt zwischen Stator 57 und Rotor 60 ein etwa axiales Magnetfeld ergibt. Um beide Stirnseiten des Rotors 60 ausnutzen zu können, umgreift der Stator 57 den Rotor 60 an dessen Außenumfang. Es ergibt sich also im Querschnitt eine etwa U-förmige Geometrie des Stators 57. Die beiden Schenkel dieser U-förmigen Stator-Querschnittsgeometrie entsprechen dabei jeweils einem Kreisring 67, der sich in knappem axialen Abstand neben der Rotor-Scheibe 60 erstreckt. Jeder dieser beiden Kreisringe 67 ist mit Spulen belegt, in denen bei der Rotation des Rotors 60 durch das jeweils umgriffene, sich bei einer Umdrehung ändernde Magnetfeld eine Spannung induziert wird, die sodann abgegriffen und - ggf. nach elektrischer Umformung - in ein Stromnetz eingespeist werden kann.

Wie man aus der Zeichnung erkennen kann, sind alle Bestandteile der erfindungsgemäßen Baugruppe 19 mittenfrei, so dass es möglich ist, bspw. Kabel od. dgl. durch eine zentrale Ausnehmung hindurch bis in die Nabe 17 hineinzuführen und damit bspw. die Antriebe der Blattlager anzusteuern und/oder - bspw. über Schleifringe - mit Strom zu versorgen.

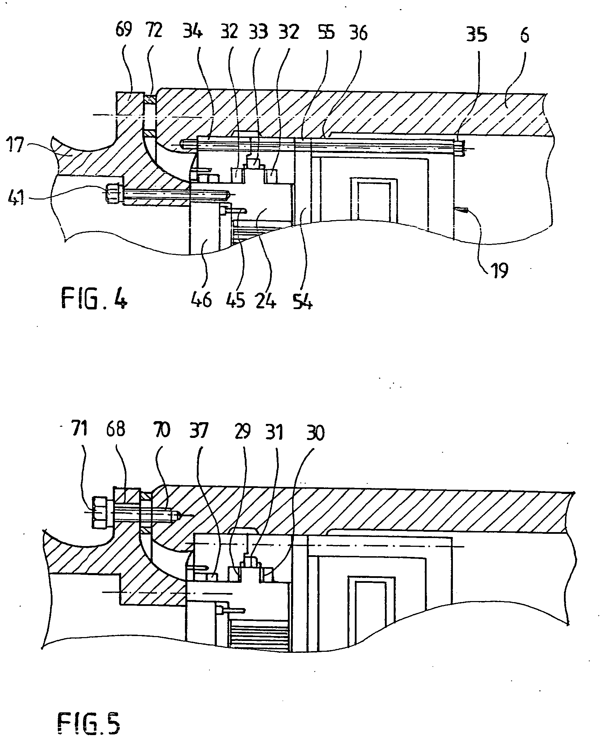

In den Fig. 4 und 5 ist eine weitere Besonderheit der erfindungsgemäßen Konstruktion wiedergegeben, nämlich der Bereich der Verbindung zwischen Nabe 17 und erfindungsgemäßer Baugruppe 19.

Wie man erkennt, ist diese Verbindung mittels lösbarer Schraubverbindungen 41 ausgestaltet, welche bei Bedarf gelöst werden können, um bspw. die Bestandteile der erfindungsgemäßen Baugruppe 19 zu warten, zu reparieren oder gar auszutauschen.

Damit in diesem Fall das Windrad 15 nicht herabfällt und auch nicht mit einem Kran abgelassen werden muß, sind an der Nabe 17 zusätzliche Befestigungsmittel 68 vorgesehen, nämlich zur Festlegung der Nabe 17 samt Blättern 18 direkt an der Tragstruktur 6. Diese Befestigungsmittel 68 befinden sich radial weiter außen als die Schraubverbindungen 41, bezogen auf die Nabenachse 16. Während die Schraubverbindungen 41 vorzugsweise innerhalb der Nabe 17 liegen, befinden sich die zusätzlichen Befestigungsmittel 68 bevorzugt an der Außenseite der Nabe 17. Sie können wahlweise in einem rundumlaufenden Bund 69 der Nabe 17 angeordnet sein oder in einzelnen, radialen Erweiterungen der Nabe 17. Vorzugsweise handelt es sich bei den zusätzlichen Befestigungsmitteln 68 um zu der Nabenachse 16 etwa parallele, diese etwa kranzförmig umgebende Bohrungen in einem rundumlaufenden Bund 69 der Nabe 17, welche zumindest bei einer bestimmten Drehstellung der Nabe 17 bzw. des Windrades 15 genau mit je einer Bohrung 70 in der Tragstruktur 6 fluchten und eine vorübergehende Fixierung der Nabe 17 an der Tragstruktur 6 mittels Schrauben 71 erlauben. Ggf. sorgen zwischengelegte Abstandselemente 72 nach Art von Unterlegscheiben für einen geeigneten Abstand zwischen Nabe 17 und Tragstruktur 6.

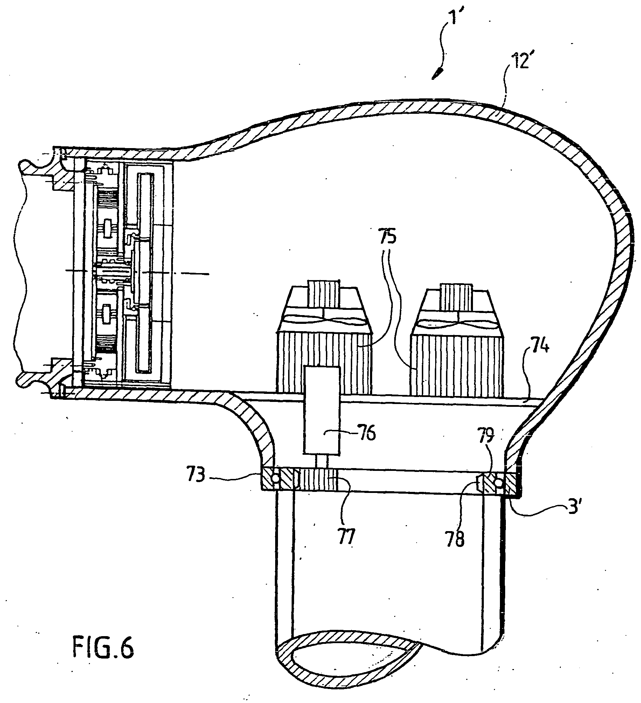

Schließlich ist in Fig. 6 eine andere Ausführungsform einer Windkraftanlage 1' dargestellt. Diese unterscheidet sich von der zuvor beschriebenen vor allem durch die Anordnung der Gondel 12' und des Maschinenhauslagers 3', während der Turm 2, das Windrad 15 samt Nabe 17 und Blättern 18 sowie die erfindungsgemäße Baugruppe 19 völlig identisch sein können.

Der markanteste Unterschied zu der Windkraftanlage 1 ist, dass der nicht am Turm 2 festgelegte Ring des Maschinenhauslagers 3' nicht im Bereich der Oberseite der Gondel 12' verankert ist, sondern im Bereich ihrer Unterseite. Fig. 6 zeigt, dass der Außenring 73 des Maschinenhauslagers 3' im unteren Bereich der Tragstruktur 6' festgelegt ist, die darüber, jedoch im unteren Bereich der Gondel 12' eine bspw. - bis auf eine Durchstiegsluke - durchgehende Bodenplatte 74 aufweist. Auf oder an dieser Bodenplatte 74 können weitere Elemente verankert sein. Dabei ist bspw. zu denken an Kühlaggregate 75 zur Kühlung des Generators 22, in denen ein bspw. flüssiges Kühlmedium abgekühlt wird, bevor es Kühlkanäle des Generators 22 durchströmt und von dort im Kreislauf schließlich wieder zu den Kühlaggregaten 75 zurückströmt. Andererseits kann an dieser Bodenplatte 74 auch ein Antriebsmotor 76 verankert werden, der bspw. über ein Ritzel 77 und eine Verzahnung 78 an der Innenseite des turmfesten Rings 79 des Maschinenhauslagers 3' die Gondel 12' in azimutaler Richtung dreht. An der Bodenplatte 74 kann schließlich auch die Verkleidung 11 der Gondel 12' befestigt sein.

Bezugszeichenliste

| | | | |
|---|---|---|---|
| 1 | Windkraftanlage | 26 | Bund |
| 2 | Turm | 27 | nabenseitiger Teilring |
| 3 | Maschinenhauslager | 28 | generatorseitiger Teilring |
| 4 | Turmachse | 29 | Stirnseite |
| 5 | Rahmen | 30 | Stirnseite |
| 6 | Tragstruktur | 31 | Umfangsseite |
| 7 | rückwärtige Wand | 32 | Wälzkörper |
| 8 | Bodenplatte | 33 | Wälzkörper |
| 9 | seitliche Wandplatte | 34 | Bohrung |
| 10 | Mündung | 35 | Schraube |
| 11 | Verkleidung | 36 | Abschnitt |
| 12 | Gondel | 37 | Dichtung |
| 13 | Leiter | 38 | Stirnseite |
| 14 | Ausstiegsöffnung | 39 | Ring |
| 15 | Windrad | 40 | Stirnseite |
| 16 | Nabenachse | 41 | Schraube |
| 17 | Nabe | 42 | Auskehlung |
| 18 | Blatt | 43 | Stirnflächenabschnitt |
| 19 | Baugruppe | 44 | Abschnitt |
| 20 | Hauptlager | 45 | Befestigungsbohrung |
| 21 | Getriebe | 46 | Abdeckplatte |
| 22 | Generator | 47 | Ausnehmung |
| 23 | Außenring | 48 | Befestigungsbohrung |
| 24 | Innenring | 49 | Hülse |
| 25 | Ringspalt | 50 | Wälzlager |
| 51 | Sonnenrad | 76 | Antriebsmotor |
| 52 | Hohlrad | 77 | Ritzel |
| 53 | Planetenrad | 78 | Verzahnung |
| 54 | Platte | 79 | Ring |
| 55 | Bohrung | | |
| 56 | Bereich | | |
| 57 | Stator | | |
| 58 | Generatorgehäuse | | |
| 59 | Bohrung | | |
| 60 | Rotor | | |
| 61 | Reduzierstück | | |
| 62 | Schraubverbindung | | |
| 63 | Lager | | |
| 64 | Abdichtung | | |
| 65 | Schraubverbindung | | |
| 66 | Rand | | |

(fortgesetzt)

| 67 | Kreisring |
| 68 | Befestigungsmittel |
| 69 | Bund |
| 70 | Bohrung |
| 71 | Schraube |
| 72 | Abstandselement |
| 73 | Außenring |
| 74 | Bodenplatte |
| 75 | Kühlaggregat |

## Patentansprüche

1. Baugruppe (19) mit einem Anschluß (40) für die Rotornabe (17) eines Windrades (15) einer Windkraftanlage (1), deren Rotor-Drehachse (16) während des Betriebs etwa in Windrichtung weist, zwecks Aufnahme aller dort auftretenden Kräfte und Momente, sowie mit wenigstens einem Rotor- oder Hauptlager (20) zur Ableitung von Axial- und Radialkräften und Kippmomenten in eine tragende Struktur (6) der Windkraftanlage (1), ferner mit einer Einrichtung zur Auskopplung der Rotationsenergie des Windrades (15) in Form eines einstufigen Planetengetriebes (21), das mit dem Rotor- oder Hauptlager (20) integriert ist und dessen Planetenräder (53) an einem Planetenradträger (54) gelagert sind und mit einem Sonnenrad (51) und einem Hohlrad (52) gleichzeitig kämmen, sowie mit einem an der Abtriebsseite des Planetengetriebes (21) angeschlossenen oder anschließbaren Generator (22) zur Wandlung der Rotationsenergie in elektrische Energie, wobei der Innenring (24) des Rotor- oder Hauptlagers (20)

   - an einer Stirnseite (40) eine Anschlußfläche zur Verbindung mit der Rotornabe (17) der Windkraftanlage (1) aufweist,
   - an seiner Außenseite eine oder mehrere Laufbahnen für Wälzkörper (32,33) aufweist, welche gleichzeitig an einer oder mehreren Laufbahnen des Außenrings (23) abrollen, sowie
   - an seiner Innenseite mit einer rundumlaufenden Verzahnung (52) versehen ist, die das Hohlrad (52) bildet und woran die Rotationsenergie abgegriffen wird, und einer ebenen Platte (54), die
   - generatorseitig des Rotor- oder Hauptlages (20) angeordnet ist, also an dessen der Rotornabe abgewandten Stirnseite,
   - mit dem Außenring (23) des Rotor- oder Hauptlagers (20) verbunden ist,
   - als Planetenradträger (54) für die mit der Verzahnung (52) an der Innenseite des Innenrings (24) des Rotor- oder Hauptlagers (20) kämmenden Planetenräder (53) des Planetengetriebes (21) dient,
   - und die eine zentrale Ausnehmung hat, durch die ein stirnseitiger Bereich (56) des Sonnenrades (51) hindurch verlängert oder zumindest zugänglich ist, und an den Rotor (60) des Generators (22) angeschlossen ist,
   - **gekennzeichnet dadurch, dass** die der Stator (57) des Generators (22) an der Platte angeordnet oder festgelegt ist,
   - wobei der Generator (22) eine scheibenförmige Gestalt aufweist und als Axialfeldgenerator ausgebildet ist.

2. Baugruppe nach Anspruch 1, **dadurch gekennzeichnet, dass** der Innenring (24) des Rotor- oder Hauptlagers (20) an seiner der Rotornabe (17) zugewandten Stirnseite (40), insbesondere an seiner dortigen Anschlußfläche, Anschlußelemente zur Befestigung der Rotornabe (17) aufweist, vorzugsweise in Form von kranzförmig verteilt angeordneten Befestigungsbohrungen, insbesondere in Form von kranzförmig verteilt angeordneten Sacklochbohrungen mit Innengewinde.

3. Baugruppe nach Anspruch 1 oder 2, **dadurch gekennzeichnet, dass** die Laufbahnen an dem Innenring (24) für daran entlang laufende Wälzkörper (32,33) und dessen rundumlaufende Verzahnung (52) und/oder dessen Anschlußelemente zur Befestigung der Rotornabe (17) durch Bearbeitung oder Formgebung eines gemeinsamen Grundkörpers gebildet sind.

4. Baugruppe nach einem der vorhergehenden Ansprüche, **dadurch gekennzeichnet, dass** das Rotor- oder Hauptlager (20) als mehrreihiges Kegel¬, Tonnen- und/oder Rollenlager ausgebildet ist.

5. Baugruppe nach einem der vorhergehenden Ansprüche, **dadurch gekennzeichnet, dass** der Innenring (24) des Rotor- oder Hauptlagers (20) als sog. Nasenring ausgebildet ist mit einem rundumlaufenden Bund (26) an seiner Außenseite; wobei vorzugsweise an der/den Stirn- und/oder Umfangsseite(n) (29,30) des rundumlaufenden Bundes (26) Laufbahnen für eine oder mehrere Reihen von Wälzkörpern (32,33) angeordnet sind.

6.  Baugruppe nach einem der vorhergehenden Ansprüche, **dadurch gekennzeichnet, dass** der Außenring (23) des Rotor- oder Hauptlagers (20) unterteilt ist in einen nabenseitigen Teilring (27) und in einen generatorseitigen Teilring (28).

7.  Baugruppe nach Anspruch einem der vorhergehenden Ansprüche, **dadurch gekennzeichnet, dass** die rundumlaufende Verzahnung (52) an der Innenseite des Innenrings (24) des Rotor- oder Hauptlagers (20) gleichzeitig das Hohlrad des Planetengetriebes (21) bildet.

8.  Baugruppe nach einem der vorhergehenden Ansprüche, **dadurch gekennzeichnet, dass** der Innenring (24) des Rotor- oder Hauptlagers (20) an seiner der Rotornabe (17) zugewandten Stirnseite (43) mit wenigstens einer nabenseitigen Platte (46) von etwa kreisformigem Umfang verbunden ist, deren Außendurchmesser gleich oder kleiner ist als der Durchmesser des Rotor- oder Hauptlagers (20), vorzugsweise gleich oder kleiner als der Außendurchmesser des Innenrings (24), wobei bevorzugt an der nabenseitigen Platte (46) eine Lagerhülse (49) festgelegt ist, an welcher das Sonnenrad (51) des Planetengetriebes (21) gelagert ist.

9.  Baugruppe nach einem der vorhergehenden Ansprüche, **dadurch gekennzeichnet, dass** der Planetenradträger des Planetengetriebes (21) an wenigstens einer generatorseitigen Platte (54) angeordnet oder mit jener integriert ist, die an der der Rotornabe (17) abgewandten Stirnseite des Rotor- oder Hauptlagers (20) angeordnet ist, wobei vorzugsweise die generatorseitige Platte (54) mit dem Außenring (23) des Rotor- oder Hauptlagers (20) verbunden oder verbindbar ist.

10. Baugruppe nach einem der vorhergehenden Ansprüche, **dadurch gekennzeichnet, dass** der Rotor (60) des Generators (22) an dem Sonnenrad (51) des Planetengetriebes (21) angeschlossen ist, wobei vorzugsweise zwischen dem Rotor (60) des Generators (22) und dem Sonnenrad (51) des Planetengetriebes (21) ein Verbindungsstück vorgesehen ist, das bevorzugt als sich in radialer Richtung verjüngendes Reduzierstück (61) ausgebildet sein kann, Insbesondere wobei zwischen dem Verbindungsstück oder Reduzierstück (61) oder dem Sonnenrad (51) einerseits und der jenes führenden Hülse (50) oder Achse eine Abdichtung (37) vorgesehen ist.

11. Baugruppe nach Anspruch 10, **dadurch gekennzeichnet, dass** das Verbindungsstück, insbesondere das Reduzierstück (61), mit einem Stützlager (63), bspw. einem Wälzlager, gekoppelt, verbunden oder integriert ist, wobei der Gegenring des Stützlagers (63) zum Verbindungsstück vorzugsweise an der generatorseitigen Platte (54) des Rotor- oder Hauptlagers (20) festgelegt oder damit integriert ist.

12. Baugruppe nach einem der vorhergehenden Ansprüche, **dadurch gekennzeichnet, dass** der Rotor (60) des Generators (22) scheibenförmig ausgebildet ist, vorzugsweise kreisringförmig, und/oder dass der Generator (22) mit Permanentmagneten versehen ist.

13. Baugruppe nach einem der vorhergehenden Ansprüche, **dadurch gekennzeichnet, dass** der Generator (22) Kanäle für ein vorzugsweise flüssiges Kühl- und/oder Temperierungsmedium aufweist.

14. Baugruppe nach einem der vorhergehenden Ansprüche, **dadurch gekennzeichnet, dass** an der der Nabe (17) zugewandten Stirnseite einer die erfindungsgemäßen Baugruppe (19) tragenden Konstruktion (6) ein oder mehrere Befestigungselemente (70) vorgesehen sind, um die Nabe (17) des Windrades (15) während des Aus- oder Einbaus der erfindungsgemäßen Baugruppe (19) vorübergehend an der Tragkonstruktion (6) festlegen zu können.

**Claims**

1.  An assembly (19) comprising a connection (40) for the rotor hub (17) of a wind turbine (15) of a wind power plant (1) whose rotor rotation axis (16) points approximately in the direction of the wind during operation, for the purpose of absorbing all the forces and torques occurring there, and comprising at least one rotor bearing or main bearing (20) for diverting axial and radial forces and tilting moments into a load-bearing structure (6) of the wind power plant (1), further comprising a device for extracting the rotational energy from the wind wheel (15) in the form of a single-stage planetary gear mechanism (21), which is integrated with the rotor bearing or main bearing (20) and whose planet gears (53) are mounted on a planet gear carrier (54) and simultaneously mesh with a sun gear (51) and a ring gear (52), and comprising a generator (22) which is or can be connected to the output side of the planetary gear mechanism (21) and operates to convert the rotational energy into electrical energy, wherein the inner ring (24) of the rotor bearing or main bearing (20)

- has at one end face (40) a connection surface for connection to the rotor hub (17) of the wind power plant (1),
- has at its outer face one or more raceways for rolling elements (32, 33) that simultaneously roll along one or more raceways of the outer ring (23), and
- is provided at its inner face with a fully circumferential set of teeth (52) which forms the ring gear and from which the rotational energy is tapped,

and with a planar plate (54), which

- is arranged at the generator side of the rotor bearing or main bearing (20), that is at its end face facing the rotor hub,
- is connected to the outer ring (23) of the rotor bearing or main bearing (20),
- serves as a planetary gear carrier (54) for planetary gears (53) of the planetary gear (21) meshing with the toothing (52) at the inner side of the inner ring (24) of the rotor bearing or main bearing (20),
- and which has a central recess, through which an end-side area (56) of the sun gear (51) can be extended or is at least accessible, and is connected to the rotor (60) of the generator (22),
- **characterized in that** the stator (57) of the generator (22) is arranged at or fixed to the plate,
- wherein the generator (22) has a disk-like shape and is formed as an axial field generator.

2.  The assembly according to claim 1, **characterized in that** the inner ring (24) of the rotor bearing or main bearing (20) has on its end face (40), facing the rotor hub (17), particulary at its connection surface located there, connecting elements for attaching the rotor hub (17), preferably in the form of coronally distributed fastening bores, particulary in the form of coronally distributed blind bores with an internal thread.

3.  The assembly according to claim 1 or 2, **characterized in that** the raceways at the inner ring (24) for rolling elements (32, 33) running therealong, and its circumferential teeth (52), and/or its connecting elements for attaching the rotor hub (17) are formed by machining or shaping a common base body.

4.  The assembly according to one of the preceding claims, **characterized in that** the rotor bearing or main bearing (20) is configured as a multi-row cone bearing, barrel roller bearing and/or roller bearing.

5.  The assembly according to one of the preceding claims, **characterized in that** the inner ring (24) of the rotor bearing or main bearing (20) is configured as a so called nose ring, with a fully circumferential flange (26) on its outer face, wherein raceways for one or more rows of rolling elements (32, 33) are preferably disposed at the peripheral and/or end face(s) (29, 30) of the fully circumferential flange (26).

6.  The assembly according to one of the preeding claims, **characterized in that** the outer ring (23) of the rotor bearing or main bearing (20) is divided into a hub-side subring (27) and a generator-side subring (28).

7.  The assembly according to one of the preceding claims, **characterized in that** the fully circumferential set of teeth (52) on the inner face of the inner ring (24) of the rotor bearing or main bearing (20) simultaneously forms the ring gear of the planetary gear mechanism (21).

8.  The assembly according to one of the preceding claims, **characterized in that** the inner ring (24) of the rotor bearing or main bearing (20) is connected at its end face (43) facing the rotor hub (17) to at least one hub-side plate (46) of approximately circular extent, whose outer diameter is equal to or less than the diameter of the rotor bearing or main bearing (20), preferably equal to or less than the outer diameter of the inner ring (24), wherein there is preferably affixed to the hub-side plate (46) a bearing bushing (49) to which the sun gear (51) of the planetary gear mechanism (21) is mounted.

9.  The assembly according to one of the preceding claims, **characterized in that** the planet gear carrier of the planetary gear mechanism (21) is disposed at or integrated with at least one generator-side plate (54), which is disposed at that end face of the rotor bearing or main bearing (20) which faces away from the rotor hub (17), wherein, preferably, the generator-side plate (54) is or can be connected to the outer ring (23) of the rotor bearing or main bearing (20).

**10.** The assembly according to one of the preceding claims, **characterized in that** the rotor (60) of the generator (22) is connected to the sun gear (51) of the planetary gear mechanism (54), wherein, preferably, between the rotor (60) of the generator (22) and the sun gear (51) of the planetary gear mechanism (21), there is provided a connection piece, which is preferably configured as a reducing piece (61) tapering in the radial direction, especially wherein a seal (37) is provided between the connection piece or reducing piece (61) or the sun gear (51), on the one hand, and the bushing (50) or shaft guiding it, on the other hand.

**11.** The assembly according to claim 10, **characterized in that** the connection piece, particulary the reducing piece (61), is coupled to, connected to or integrated with a support bearing (63), for example a rolling bearing, wherein the counter ring of said support bearing (63) for the connection piece is preferably fixed to or integrated with the generator-side plate (54) of the rotor bearing or main bearing (20).

**12.** The assembly according to one of the preceding claims, **characterized in that** the rotor (60) of the generator (22) is configured as disk-shaped, preferably circular-ring-shaped, and/or **in that** the generator (22) is equipped with permanent magnets.

**13.** The assembly according to one of the preceding claims, **characterized in that** the generator (22) comprises channels for a preferably fluid cooling and/or temperature control medium.

**14.** The assembly according to one of the preceding claims, **characterized in that** one or more fastening elements (70) are provided at the end face, facing the hub (17), of a structure (6) supporting the assembly (19) according to the invention, in order to fix the hub (17) of the wind turbine (15) temporarily to the support structure (6) during the removal or installation of the assembly (19) according to the invention.

**Revendications**

**1.** Module (19) comportant un raccordement (40) pour le moyeu de rotor (17) d'une roue éolienne (15) d'une éolienne (1), dont l'axe de rotation de rotor (16) pointe approximativement dans la direction du vent pendant le fonctionnement, afin de recevoir toutes les forces et tous les couples s'y exerçant, ainsi qu'au moins un palier de rotor ou un palier principal (20) pour dériver des forces axiales et radiales et des composantes de basculement dans une structure porteuse (6) de l'éolienne (1), comportant en outre un dispositif pour le découplage de l'énergie de rotation de la roue éolienne (15) sous forme d'un train épicycloïdal (21) à un seul étage, qui est intégré au palier de rotor ou au palier principal (20) et dont les pignons satellites (53) sont montés sur un porte-satellites (54) et engrènent simultanément avec une roue solaire (51) et avec une couronne (52), ainsi qu'avec un générateur (22) raccordé ou qui peut être raccordé au côté sortie du train épicycloïdal (21) et qui sert à transformer l'énergie de rotation en énergie électrique, la bague intérieure (24) du palier de rotor ou du palier principal (20)

- comportant au niveau d'une face frontale (40) une surface de raccordement pour le raccordement avec le moyeu de rotor (17) de l'éolienne (1),
- comportant au niveau de sa face extérieure un ou plusieurs chemins de roulement pour des corps de roulement (32, 33) qui roulent simultanément sur un ou plusieurs chemins de roulement de la bague extérieure (23), ainsi qu'
- étant dotée au niveau de sa face intérieure d'une denture (58) périphérique, qui forme la couronne (52) et au niveau de laquelle l'énergie de rotation est prélevée, et d'une plaque plane (54) qui
- est disposée côté générateur du palier de rotor ou du palier principal (20), par conséquent au niveau de sa face frontale opposée au moyeu de rotor,
- est reliée à la bague extérieure (23) du palier de rotor ou du palier principal (20),
- sert de porte-satellites (54) pour les pignons satellites (53) du train épicycloïdal (21) engrenant avec la denture (52) sur la face intérieure de la bague intérieure (24) du palier de rotor ou du palier principal (20),
- et qui présente un évidement central par lequel une zone côté frontal (56) de la roue solaire (51) est allongée ou au moins accessible, et qui est raccordée au rotor (60) du générateur (22),
- **caractérisé en ce que** le stator (57) du générateur (22) est disposé ou fixé sur la plaque,
- **en ce que** le générateur (22) présente une forme de disque et est conçu comme générateur axial.

**2.** Module selon la revendication 1, **caractérisé en ce que** la bague intérieure (24) du palier de rotor ou du palier principal (20) au niveau de sa face frontale (40) tournée vers le moyeu de rotor (17), en particulier au niveau de sa surface de raccordement, comporte des éléments de raccordement pour la fixation du moyeu de rotor (17), de préférence en forme de trous de fixation répartis en forme de couronne, en particulier en forme d'alésages borgnes avec taraudage répartis en forme de couronne.

3. Module selon la revendication 1 ou 2, **caractérisé en ce que** les chemins de roulement au niveau de la bague intérieure (24) pour des corps de roulement (32, 33) se déplaçant le long de ces derniers et dont la denture (52) périphérique et/ou dont les éléments de raccordement pour la fixation du moyeu de rotor (17) sont formés par usinage ou formage d'un corps de base commun.

4. Module selon l'une des revendications précédentes, **caractérisé en ce que** le palier de rotor ou le palier principal (20) est conçu comme palier conique, palier à tonneaux et/ou palier à rouleaux sur plusieurs rangées.

5. Module selon l'une des revendications précédentes, **caractérisé en ce que** la bague intérieure (24) du palier de rotor ou du palier principal (20) est conçue comme bague dite à talon avec un épaulement périphérique (26) au niveau de sa face extérieure ; des chemins de roulement pour une ou plusieurs rangées de corps de roulement (32, 33) étant disposés de préférence au niveau de la face frontale/des faces frontales et/ou de la face circonférentielle/des faces circonférentielles (29, 30) de l'épaulement périphérique (26).

6. Module selon l'une des revendications précédentes, **caractérisé en ce que** la bague extérieure (23) du palier de rotor ou du palier principal (20) est divisée en une bague partielle côté moyeu (27) et en une bague partielle côté générateur (28).

7. Module selon l'une des revendications précédentes, **caractérisé en ce que** la denture périphérique (52) au niveau de la face intérieure de la bague intérieure (24) du palier de rotor ou du palier principal (20) forme simultanément la couronne du train épicycloïdal (21).

8. Module selon l'une des revendications précédentes, **caractérisé en ce que** la bague intérieure (24) du palier de rotor ou du palier principal (20) est reliée au niveau de sa face frontale (43) tournée vers le moyeu de rotor (17) à au moins une plaque côté moyeu (46) d'un périmètre approximativement circulaire, dont le diamètre extérieur est égal ou inférieur au diamètre du palier de rotor ou du palier principal (20), de préférence égal ou inférieur au diamètre extérieur de la bague intérieure (24), un coussinet de palier (49) étant fixé préférentiellement au niveau de la plaque côté moyeu (46) sur lequel la roue solaire (51) du train épicycloïdal (21) est montée.

9. Module selon l'une des revendications précédentes, **caractérisé en ce que** le porte-satellites du train épicycloïdal (21) est disposé au moins au niveau d'une plaque côté générateur (54) ou intégré à celle qui est disposée au niveau de la face frontale opposée au moyeu de rotor (17) du palier de rotor ou du palier principal (20), la plaque côté générateur (54) étant de préférence reliée ou pouvant être reliée à la bague extérieure (23) du palier de rotor ou du palier principal (20).

10. Module selon l'une des revendications précédentes, **caractérisé en ce que** le rotor (60) du générateur (22) est raccordé à la roue solaire (51) du train épicycloïdal (21), un raccord étant prévu de préférence entre le rotor (60) du générateur (22) et la roue solaire (51) du train épicycloïdal (21), ledit raccord pouvant préférentiellement être conçu comme raccord de réduction (61) réduit en sens axial, en particulier **en ce qu'**un joint (37) est prévu entre le raccord ou raccord de réduction (61) ou la roue solaire (51) d'une part et le manchon guide (50) de celle-ci ou de l'axe.

11. Module selon la revendication 10, **caractérisé en ce que** le raccord, en particulier le raccord de réduction (61) est accouplé, relié ou intégré à un palier de support (63), par exemple un palier à roulement, **en ce que** la contre-bague du palier de support (63) par rapport au raccord est fixée de préférence au niveau de la plaque côté générateur (54) du palier de rotor ou du palier principal (20) ou y est intégrée.

12. Module selon l'une des revendications précédentes, **caractérisé en ce que** le rotor (60) du générateur (22) est conçu en forme de disque, de préférence de forme annulaire, et/ou que le générateur (22) est muni d'aimants permanents.

13. Module selon l'une des revendications précédentes, **caractérisé en ce que** le générateur (22) comporte des canaux pour un agent de refroidissement et/ou de régulation de température de préférence fluide.

14. Module selon l'une des revendications précédentes, **caractérisé en ce qu'**un ou plusieurs éléments de fixation (70) sont prévus au niveau de la face frontale tournée vers le moyeu (17) d'une construction porteuse (6) du module (19) selon l'invention pour pouvoir monter provisoirement le moyeu (17) de la roue éolienne (15) à la construction porteuse (6) pendant le démontage ou le montage du module (19) selon l'invention.

FIG.1

FIG. 2

34

FIG.3

69  72   34   32  33  32   55   36          35    6

17

41

FIG. 4          46  45  24  54

19

71   68   70   37   29  31   30

FIG.5

FIG.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0214690 A1
- DE 01954251 T1